# EUROPÄISCHE PATENTSCHRIFT

(11) **EP 2 534 743 B1**
(45) Veröffentlichungstag und Bekanntmachung des Hinweises auf die Patenterteilung: **10.12.2014**
(21) Anmeldenummer: 10798786.9
(22) Anmeldetag: 20.12.2010
(51) Int. Cl.: H02J 7/00, B60L 3/00, B60L 3/04, B60L 11/18, H02H 3/08

(54) **VERFAHREN ZUM AUFLADEN EINES WIEDERAUFLADBAREN ENERGIESPEICHERS, AUFLADEVORRICHTUNG FÜR EINEN WIEDERAUFLADBAREN ENERGIESPEICHER UND LEITUNGSSCHUTZSCHALTER**
METHOD FOR CHARGING A RECHARGEABLE ENERGY STORE, CHARGING DEVICE FOR A RECHARGEABLE ENERGY STORE, AND CIRCUIT BREAKER
PROCÉDÉ DE CHARGE D'UN ACCUMULATEUR D'ÉNERGIE RECHARGEABLE, DISPOSITIF DE CHARGE POUR UN ACCUMULATEUR D'ÉNERGIE RECHARGEABLE ET DISJONCTEUR DE PROTECTION

(30) Priorität: 09.02.2010 DE 102010001712
(43) Veröffentlichungstag der Anmeldung: 19.12.2012
(73) Patentinhaber: Robert Bosch GmbH, 70442 Stuttgart (DE)
(72) Erfinder: KILB, Jochen, 70825 Korntal-Muenchingen (DE)
(86) Internationale Anmeldenummer: PCT/EP2010/070188
(87) Internationale Veröffentlichungsnummer: WO 2011/098183

(56) Entgegenhaltungen:
- GB-A- 2 450 426
- US-A1- 2005 103 613
- US-A1- 2009 195 237
- US-A1- 2011 133 693

## Beschreibung

Die Erfindung betrifft ein Verfahren zum Aufladen eines wiederaufladbaren Energiespeichers. Zusätzlich betrifft die Erfindung eine Aufladevorrichtung für einen wiederaufladbaren Energiespeicher. Des Weiteren betrifft die Erfindung einen Leitungsschutzschalter.

### Stand der Technik

Die DE 10 2007 038 376 A1 beschreibt ein Aufladegerät zum Aufladen einer Batterie. Mittels des Aufladegeräts ist ein Aufladestrom von einer Stromleitung, an welche die Batterie ankoppelbar ist, bereitstellbar. Zusätzlich soll das beschriebene Aufladegerät über eine Funktion zum Feststellen der Batteriekapazität verfügen. Mittels des Feststellens der Batteriekapazität soll erkennbar sein, ob eine ausreichende Funktionsfähigkeit der Batterie gewährleistet ist.

Die US 2009/0195237 A1 offenbart ebenfalls ein Aufladegerät.

### Offenbarung der Erfindung

Die Erfindung schafft ein Verfahren zum Aufladen eines wiederaufladbaren Energiespeichers mit den Merkmalen des Anspruchs 1, eine Aufladevorrichtung für einen wiederaufladbaren Energiespeicher mit den Merkmalen des Anspruchs 4 und einen Leitungsschutzschalter mit den Merkmalen des Anspruchs 8.

Herkömmlicher Weise erfolgt bei einem Aufladen eines Energiespeichers mittels eines von einer Stromleitung entnommenen Aufladestroms häufig ein Auslösen eines Leitungsschutzschalters (Überlasteinrichtung) der Stromleitung oder eine Überlastung der Stromleitung, sofern auf deren Ausstattung mit dem Leitungsschutzschalter verzichtet wird. Eine derartige Situation kann insbesondere auftreten, wenn ein für einen energiehungrigen Verbraucher geeigneter Energiespeicher und/oder mehrere Energiespeicher gleichzeitig aufgeladen werden. Mittels der vorliegenden Erfindung ist es jedoch möglich, das Aufladen eines Energiespeichers so auszuführen, dass eine vorgegebene Lastschwelle des an die Stromleitung angekoppelten Leitungsschutzschalters nicht überschritten und/oder der Aufladevorgang an das Aufladen des weiteren Energiespeichers angepasst wird. Dies reduziert die Wahrscheinlichkeit eines Auslösens des Leitungsschutzschalters (Überlasteinrichtung) und/oder eine Überlastung der mit dem mindestens einen Energiespeicher verbundenen Stromleitung. Somit ist sicherstellbar, dass der gewünschte Aufladevorgang nicht durch das Auslösen des Leitungsschutzschalters und/oder eine Überhitzung der Stromleitung unterbrochen wird. Insbesondere kann mittels der vorliegenden Erfindung der gewünschte Aufladevorgang so ausgeführt werden, dass ein hinsichtlich der Lastschwelle des Leitungsschutzschalters und/oder des zusätzlichen Aufladens des weiteren Energiespeichers optimierter maximaler elektrischer Strom dem wiederaufzuladenden Energiespeicher verlässlich zugeführt werden kann.

Die im Weiteren beschriebene Erfindung realisiert insbesondere eine sichere Integration von wiederaufzuladenden Energiespeichern für energiehungrige Verbraucher in eine bereits vorhandene Infrastruktur. Beispielsweise kann unter einer bereits vorhandenen Infrastruktur ein Stromnetz eines Wohnhauses verstanden werden. Gleichzeitig ist unter Gewährleistung der sicheren Integration ein maximal zulässiger Leistungsoutput realisierbar.

Die vorliegende Erfindung ermöglicht beispielsweise ein vorteilhaftes Ladegerät für ein Hybrid- und ein Elektrofahrzeug, welches dazu ausgelegt ist, den Leistungs- bzw. Strombedarf eines Aufladpfades eines fahrzeugeigenen Energiespeichers an eine vorhandene Infrastruktur, beispielsweise an eine Stromleitung mit einem Leitungsschutzschalter und mehreren angeschlossenen Stromverbrauchern, anzupassen. Wie nachfolgend genauer beschrieben wird, gewährleistet das Ladegerät ein verlässliches Aufladen des fahrzeugeigenen Energiespeichers, welches nicht durch ein Auslösen des Leitungsschutzschalters und/oder eine Überlastung der Stromleitung unterbrochen wird. Dies ist mit dem Vorteil verbunden, dass ein Nutzer des Elektrofahrzeugs nach einem Aktivieren eines Aufladevorgangs, beispielsweise durch ein Einführen eines Steckers in eine zu einem Netzwerk eines Wohnhauses gehörende Steckdose, mit einem verlässlichen Ausführen des gewünschten Aufladevorgangs sicher rechnen kann.

Wie unten genauer ausgeführt wird, ist für eine Ausführung der im Weiteren beschriebenen Erfindung nur ein vergleichsweise geringer Messaufwand erforderlich. Insbesondere kann der Messaufwand auf eine Leistungs- bzw. Strommessung oder eine diese ersetzende Temperaturmessung, welche im Sicherungspfad ausgeführt wird, begrenzt werden. Derartige Messungen lassen sich mit kostengünstigen Sensoren ausführen. Ein aufwändiges Auswerten der ermittelten Werte ist ebenso nicht erforderlich. Für die Auswertung der ermittelten Werte kann somit eine kostengünstige Auswerteeinrichtung verwendet werden.

Es wird darauf hingewiesen, dass herkömmliche Aufladegeräte, wie beispielsweise das in der DE 10 2007 038 376 A1 beschriebene Aufladegerät, lediglich dazu ausgelegt sind, zur Gewährleistung eines verlässlichen Aufladens eine Funktionsfähigkeit der aufzuladenden Batterie zu berücksichtigen. Demgegenüber basiert die vorliegende Erfindung auf der Erkenntnis, dass eine Verlässlichkeit eines Wiederaufladens eines wiederaufladbaren Energiespeichers steigerbar ist, indem der Aufladevorgang an eine aktuelle Auslastung des Leitungsschutzschalters der verwendeten Stromleitung und/oder an ein zusätzliches Aufladen mindestens eines weiteren Energiespeichers an der verwendeten Stromleitung angeglichen wird. Als Ergänzung dazu kann bei dem hier beschriebenen Verfahren und bei der entsprechenden Aufladevorrichtung auch eine Funktionsfähigkeit des wiederaufladbaren Energiespeichers, beispielsweise durch ein Feststellen der Batteriekapazität während des Wiederaufladens, ermittelt und berücksichtigt werden. Die vorliegende Erfindung erweitert somit die Vorteile eines herkömmlichen Aufladegeräts.

### Kurze Beschreibung der Zeichnungen

Weitere Merkmale und Vorteile der vorliegenden Erfindung werden nachfolgend anhand der Figuren erläutert. Es zeigen:
- Fig. 1: ein Flussdiagramm zum Darstellen einer Ausführungsform des Verfahrens zum Aufladen eines wiederaufladbaren Energiespeichers; und
- Fig. 2: eine schematische Darstellung einer Ausführungsform der Aufladevorrichtung und einer korrespondierende Ausführungsform des Leitungsschutzschalters.

### Ausführungsformen der Erfindung

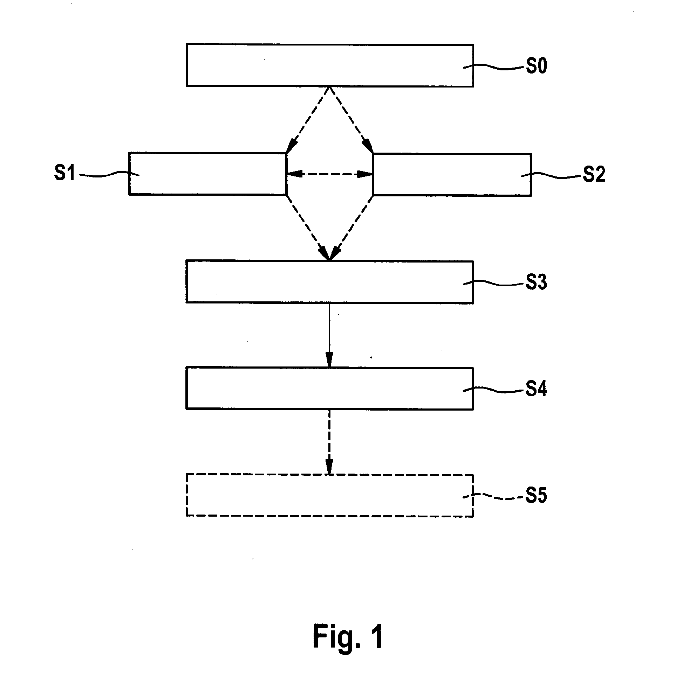

Fig. 1 zeigt ein Flussdiagramm zum Darstellen einer Ausführungsform des Verfahrens zum Aufladen eines wiederaufladbaren Energiespeichers.

In einem vorausgehenden Verfahrensschritt S0 wird der wiederaufladbare Energiespeicher, beispielsweise eine Batterie, insbesondere eine Fahrzeugbatterie, an eine Stromleitung angekoppelt. Wie nachfolgend genauer erläutert wird, ist das hier beschriebene Verfahren derart ausgelegt, dass zum Aufladen des wiederaufladbaren Energiespeichers keine besonderen Anforderungen an die verwendete Stromleitung zu stellen sind. Beispielsweise entfällt die Notwendigkeit, zum Aufladen des Energiespeichers eine Stromleitung zu verwenden, bei welcher eine vergleichsweise hohe Mindeststromstärke über eine bestimmte Mindestzeit ohne eine Überlastung der Stromleitung gewährleistet ist. Die Stromleitung kann insbesondere eine in einem Wohnhaus verbaute Stromleitung sein, an welche mehrere Verbraucher, wie beispielsweise die üblichen Haushaltgeräte, angeschlossen sind. Das Ankoppeln des wiederaufladbaren Energiespeichers kann im Allgemeinen durch ein Stecken eines zugehörigen Steckers in eine Haushalts-Steckdose erfolgen. Auch in diesem Fall ist ein Aufladen einer Fahrzeugbatterie trotz des vergleichsweise hohen Leistungsbedarfs über einen vergleichsweise langen Zeitraum verlässlich ausführbar.

In einem Verfahrensschritt S1 wird eine Auslastungsinformation bezüglich einer Auslastung einer Auslöselast eines an die Stromleitung gekoppelten Leitungsschutzschalters ermittelt. Unter der Auslöselast kann beispielsweise eine Überlastschwelle verstanden werden. Übersteigt eine während eines bestimmten Zeitintervalls durch den Leitungsschutzschalter geführte Stromstärke die Auslöselast (Überlastschwelle), so wird in der Regel ein Abschaltmechanismus (Auslösemechanismus) des Leitungsschutzschalters aktiviert, welcher eine Unterbrechung des Stromflusses durch den Leitungsschutzschalter bewirkt. Man spricht in diesem Fall von einem Auslösen des Leitungsschutzschalters. Das Festlegen/Erkennen der zu hohen Auslastung des Leitungsschutzschalters, d.h. der für das bestimmte Zeitintervall zu hohen Stromstärke, erfolgt unter Berücksichtigung der Auslöselast, entsprechend welcher der Leitungsschutzschalter in der Regel ausgelegt ist.

Unter dem Leitungsschutzschalter, für welchen die Auslastungsinformation ermittelt wird, kann auch ein LS-Schalter, ein Sicherungsautomat, eine Überstromschutzeinrichtung und/oder ein MCB-Gerät (Miniatur Circuit Breaker) verstanden werden. Zusätzlich zu den hier aufgezählten Beispielen kann unter dem Leitungsschutzschalter auch ein anderes, vorzugsweise nach einem Auslösen nicht selbstständig zurückstellendes, aber nach dem Auslösen wieder verwertbares Sicherungselement, verstanden werden. Auf ein Beispiel für eine geeignete Ausbildung eines verwendbaren Leitungsschutzschalters wird unten genauer eingegangen.

Ein Leitungsschutzschalter ist eine kostengünstige und leicht verbaubare Schutzeinrichtung, um eine Leitung vor einer Beschädigung durch eine zu starke Erwärmung in Folge von einem zu hohen über die Stromleitung geführten Strom zu schützen/zu bewahren. Dazu kann der Leitungsschutzschalter einen Abschaltmechanismus (Auslösemechanismus) aufweisen, mittels welchem bei einem Festlegen/Erkennen einer für ein bestimmtes Zeitintervall über die Stromleitung geführten zu hohen Stromstärke ein Stromfluss durch den Leitungsschutzschalter, und damit über die Stromleitung, unterbunden wird.

Als Auslastungsinformation bezüglich der Auslastung der Auslöselast des Leitungsschutzschalters kann beispielsweise eine prozentuale Auslastung der Auslöselast, eine Größe bezüglich der aktuellen Auslastung der Auslöselast und/oder eine Größe bezüglich einer Differenz zwischen der aktuellen Auslastung und einer maximal möglichen Auslastung ermittelt werden. Beispielsweise kann die Auslastungsinformation mindestens eine Stromstärke umfassen, welche für ein bestimmtes Zeitintervall zusätzlich zu der aktuellen Auslastung über den Leitungsschutzschalter weiterleitbar ist, ohne dass mit einem Auslösen des Leitungsschutzschalters zu rechnen ist. Ebenso kann die Auslastungsinformation eine Angabe zu der aktuellen Auslastung und eine Typinformation bezüglich des Leitungsschutzschaltertyps umfassen, so dass bei einer späteren Auswertung der Auslastungsinformation die maximal mögliche Auslastung und/oder die entsprechende Auslöselast anhand des Leitungsschutzschaltertyps festlegbar und/oder eine für ein bestimmtes Zeitintervall ohne ein Auslösen des Leitungsschutzschalters über diesen führbare zusätzliche Stromstärke ermittelbar und/oder aus einen Speicher auslesbar ist.

Als Alternative oder als Ergänzung zu dem Verfahrensschritt S1 kann das Verfahren auch einen Verfahrensschritt S2 umfassen, in welchem eine Fremd-Aufladeinformation bezüglich einer Leistung und/oder einer Restzeit eines von der Stromleitung an einen weiteren Energiespeicher bereitgestellten Fremdaufladestroms ermittelt wird. Die Fremd-Aufladeinformation kann somit eine Information bezüglich eines zusätzlichen Aufladevorgangs zum Aufladen mindestens eines weiteren Energiespeichers unter Verwendung der gleichen Stromleitung umfassen. Man kann diesen zusätzlichen Aufladevorgang auch als Fremdaufladevorgang bezeichnen. Beispielsweise soll parallel zu dem Aufladen des wiederaufladbaren Energiespeichers auch eine Fahrzeugbatterie an der gleichen Stromleitung mittels des bereitgestellten Fremdaufladestroms aufgeladen werden. Die Fremd-Aufladeinformation kann in diesem Fall eine Stromstärke des Fremdaufladestroms und/oder eine für ein vollständiges Aufladen der Fahrzeugbatterie wahrscheinliche Restzeit umfassen.

Die Fremd-Aufladeinformation kann auch lediglich ein Signal umfassen, welches zu erkennen gibt, dass die Restaufladezeit des Fremdaufladevorgangs noch größer als eine vorgegebene Mindestzeit oder ungleich Null ist. Auf die Auswertung/Verwertung einer derartigen Fremd-Aufladeinformation ("Ich-lade-noch"-Signal) wird unten eingegangen.

Es wird darauf hingewiesen, dass lediglich der Verfahrensschritt S1 einen an die Stromleitung gekoppelten Leitungsschutzschalter mit integrierter Sensoreinrichtung und Signal-Ausgabeeinrichtung erfordert. Das Ausführen des Verfahrensschritts S2 erfordert keinen (erweiterten) Leitungsschutzschalter. Somit ist das hier beschriebene Verfahren auch bei einem Aufladen des wiederaufladbaren Energiespeichers an einer Stromleitung ohne einen (erweiterten) Leitungsschutzschalter ausführbar. Zusätzlich legt die verwendete Nummerierung für die Verfahrensschritte S1 und S2 keine einzuhaltende zeitliche Reihenfolge zum Ausführen der Verfahrensschritte S1 und S2 fest.

In einem Verfahrensschritt S3 wird zumindest eine Vorgabegröße bezüglich eines zeitlichen Soll-Stromstärkeverlaufs eines von der Stromleitung an den wiederaufladbaren Energiespeicher bereitzustellenden Soll-Aufladestroms festgelegt. Dabei erfolgt das Festlegen des Soll-Aufladestroms unter Berücksichtigung der ermittelten Auslastungsinformation und/oder der ermittelten Fremdaufladeinformation. Als die zumindest eine Vorgabegröße bezüglich des zeitlichen Soll-Stromstärke-Verlaufs kann zumindest eine Vorgabegröße bezüglich einer konstanten Soll-Stromstärke des bereitzustellenden Soll-Aufladestroms, einer Höchst-Stromstärke des bereitzustellenden Soll-Aufladestroms, eines Zeitverlaufs einer variierenden Soll-Stromstärke des bereitzustellenden Soll-Aufladestroms, einer Wartezeit vor einem Aktivieren des bereitzustellenden Soll-Aufladestroms und/oder einer Abbruchzeit des bereitzustellenden Soll-Aufladestroms festgelegt werden.

Beispielsweise wird in dem Verfahrensschritt S3 eine konstante Soll-Stromstärke oder ein Zeitverlauf einer variierenden Soll-Stromstärke des bereitzustellenden Soll-Aufladestroms festgelegt. Des Weiteren kann ein Zeitintervall, für welches der Soll-Aufladestrom zum Wiederaufladen des Energiespeichers aktiviert werden soll, in dem Verfahrensschritt S3 festgelegt werden. Dies kann auch so erfolgen, indem festgelegt wird, dass das Aktivieren des bereitzustellenden Soll-Aufladestroms erst nach einer Wartezeit ausgeführt wird. Beispielsweise kann bei dem Festlegen der Wartezeit die noch verbleibende Restzeit des Fremdaufladestroms speziell berücksichtigt werden. Ebenso kann über die Abbruchzeit das Wiederaufladen des Energiespeichers abgebrochen werden, um eine Überlastung der Stromleitung aufgrund eines zu langen Aufladevorgangs zu vermeiden. Als Alternative oder als Ergänzung zu den in diesen Abschnitten genannten Werten können auch entsprechende Größen in dem Verfahrensschritt S3 festgelegt werden.

Wird als Fremd-Aufladeinformation ein "Ich-lade-noch"-Signal empfangen, so kann in dem Verfahrensschritt S3 festgelegt werden, dass mit dem Wiederaufladen des eigenen Energiespeichers so lange gewartet wird, bis innerhalb einer vorgegebene Zeitspanne kein "lch-lade-noch"-Signal mehr empfangen wird. In einer Weiterbildung kann während des Empfangens des "Ich-lade-noch"-Signals ein "lch-warte"-Signal an die mindestens eine Komponente ausgegeben werden. Ein Anlegen eines Aufladestroms von der Stromleitung an den wiederaufladbaren Energiespeicher erfolgt in einem Verfahrensschritt S4. Dabei wird der Verfahrensschritt S4 unter Berücksichtigung der zumindest einen in dem Verfahrensschritt S3 festgelegten Vorgabegröße ausgeführt.

Mittels des hier beschriebenen Verfahrens kann ein wiederaufladbarer Energiespeicher auf einfache Weise unter zusätzlicher Berücksichtigung einer noch möglichen weiteren Auslastbarkeit eines Leitungsschutzschalters, und damit einer zum Aufladen verwendeten Stromleitung, und/oder eines mittels der verwendeten Stromleitung auszuführenden Fremdaufladevorgangs durchgeführt werden. Dies gewährleistet, dass das Wiederaufladen des Energiespeichers, beziehungsweise des mindestens einen an die Stromleitung angekoppelten weiteren Energiespeichers, nicht durch ein Auslösen des Leitungsschutzschalters und/oder eine Überlastung der Stromleitung unterbrochen wird. Insbesondere kann dabei das Wiederaufladen des Energiespeichers an die Eigenschaften der Stromleitung und/oder des Leitungsschutzschalters angepasst werden.

In einem optionalen Verfahrensschritt S5 kann vor oder während des Anlegens des Aufladestroms eine Eigen-Aufladeinformation bezüglich des zeitlichen Soll-Stromstärkeverlaufs an eine an den weiteren Energiespeicher angekoppelte Komponente ausgegeben werden. Somit kann auch das Fremdaufladen des mindestens einen weiteren Energiespeichers an das Aufladen des wiederaufladbaren Energiespeichers angepasst werden. Ebenso kann nach dem Empfangen der Fremd-Aufladeinformation ein "Verstanden"-Signal an die Komponente ausgegeben werden.

In einer Weiterbildung des hier beschriebenen Verfahrens können die Komponente und die Aufladevorrichtung des wiederaufladbaren Energiespeichers ihre noch auszuführenden Aufladevorgänge untereinander abstimmen. Man kann dies auch so bezeichnen, dass die mindestens eine Komponente und die Aufladevorrichtung als intelligente Verbraucher/Ladegeräte ausgebildet sind. Beispielsweise kann auch die Komponente eine Soll-Größe bezüglich der Leistung und/oder der Restzeit des Fremdaufladestroms nach einem Empfangen einer Nachricht von der Aufladevorrichtung neu festlegen. Des Weiteren kann die Eigen-Aufladeinformation in einem optionalen Verfahrensschritt auch an eine sich während des Anlegens des Aufladestroms an die Stromleitung ankoppelnde Aufladeeinheit ausgegeben werden. Es wird darauf hingewiesen, dass die hier aufgezählten Weiterbildungen mit oder ohne einen intelligenten Leitungsschutzschalter ausführbar sind.

Nachfolgend wird ein Ausführungsbeispiel kurz beschrieben:
Bei dem Ausführungsbeispiel koppeln die Ladegeräte zweier Elektrofahrzeuge mit jeweils 3000 W Aufnahmeleistung an die gleiche Stromleitung an. Die Stromleitung weist einen Sicherungspfad mit 16 A bei 230 V auf, was eine Belastbarkeit (Auslöselast/Überlastschwelle) von ca. 3600 W ergibt. Nach dem Ankoppeln können die beiden Ladegeräte der Elektrofahrzeuge mittels des hier beschriebenen Verfahrens beispielsweise eine Master-Slave-Funktion ausführen. Insbesondere kann das später an die Stromleitung ankoppelnde Ladegerät über das Festlegen der Wartezeit unter Berücksichtigung einer noch verbleibenden Restzeit zum Aufladen der Batterie des zuerst an die Stromleitung ankoppelnden Ladegeräts sicherstellen, dass mit dem Aufladen der eigenen Batterie so lange gewartet wird, bis der Fremd-Aufladevorgang abgeschlossen ist oder die eigene Aufnahmeleistung auf einen Wert begrenzt ist, welcher für das Netz unkritisch ist. Durch ein derartiges aufeinander abgestimmtes Nutzen der Stromleitung/Ressourcen, welches auch als "First come - first serve"-Verfahren bezeichenbar ist, wird sichergestellt, dass die Batterien beider Fahrzeuge verlässlich aufgeladen werden, ohne dass ein Auslösen eines Schutzschalters und/oder eine Überlastung der verwendeten Stromleitung und damit eine Unterbrechung der gewünschten Aufladevorgänge auftreten.

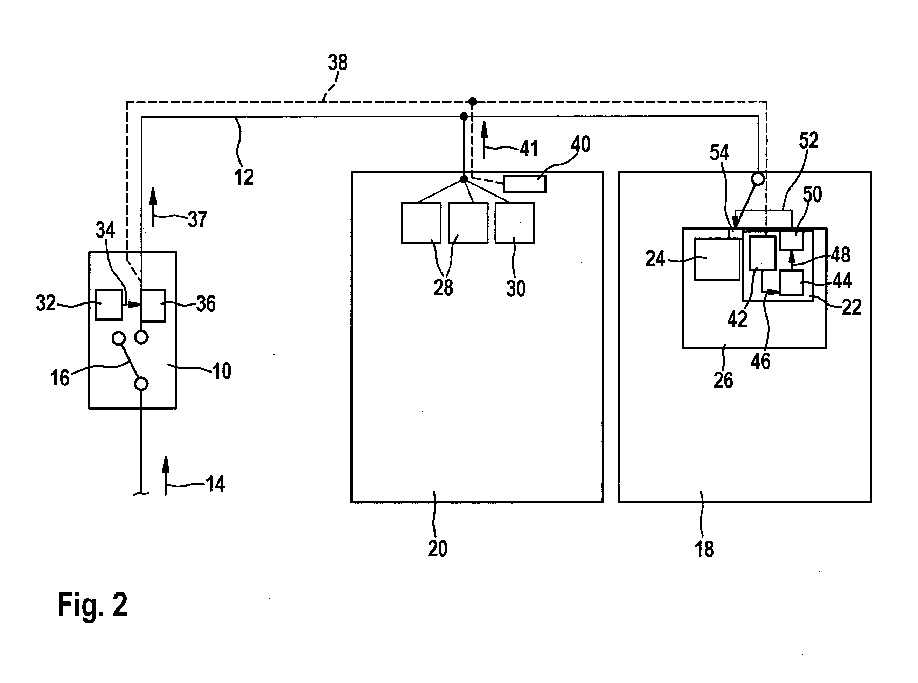

Fig. 2 zeigt eine schematische Darstellung einer Ausführungsform der Aufladevorrichtung und einer korrespondierende Ausführungsform des Leitungsschutzschalters.

Der in Fig. 2 schematisch wiedergegebene Leitungsschutzschalter 10 ist an einer Stromleitung 12 angekoppelt. Unter einem Ankoppeln des Leitungsschutzschalters 10 an der Stromleitung 12 kann verstanden werden, dass der Leitungsschutzschalter 10 so innerhalb der Stromleitung 12 angeordnet ist, dass ein Stromfluss 14 entlang der Stromleitung 12 durch den Leitungsschutzschalter 10 geführt wird. Der Leitungsschutzschalter ist so ausgebildet, dass er eine für den Leitungsschutzschalter 10 festgelegte/fest vorgegebene Auslöselast (Überlastschwelle) aufweist. Übersteigt eine während eines bestimmten Zeitintervalls durch den Leitungsschutzschalter 10 geführte Stromstärke des Stromflusses 14 die Auslöselast (Überlastschwelle), so wird ein Abschaltmechanismus (Auslösemechanismus) 16 des Leitungsschutzschalters 10 aktiviert, welcher eine Unterbrechung des Stromflusses 14 durch den Leitungsschutzschalter 10 bewirkt. Insbesondere kann der Leitungsschutzschalter 10 so ausgelegt sein, dass die Zeit von einem Überschreiten des Nennstroms bis zur Auslösung des Leitungsschutzschalters 10 von der Differenz zwischen dem Nennstrom und der Stromstärke des Überstroms abhängt. Bei einem hohen Überstrom kann die Auslösezeit somit kürzer als bei einer geringen Überschreitung des Nennstromes sein.

In dem Leitungsschutzschalter 10 kann beispielsweise eine Strom- bzw. Leistungsmessung integriert sein. Insbesondere kann der Leitungsschutzschalter einen Shunt, einen Hallsensor, einen LEM-Wandler und/oder einen entsprechenden Strom- bzw. Leistungssensor umfassen. Über eine Auswertung, beziehungsweise einen Vergleich mit hinterlegten/einprogrammierten Grenzen und/oder Kennlinien, kann in diesem Fall ein Übersteigen der vorgegebenen Auslöselast erkannt und gegebenenfalls der Abschaltmechanismus 16 aktiviert werden. Ebenso kann die Abschaltung durch einen magnetischen Auslöser erfolgen.

Als Alternative oder Ergänzung dazu kann der Leitungsschutzschalter auch eine Temperatursensierung haben. In diesem Fall ist in dem Leitungsschutzschalter ein Sensor zur Messung einer Temperatur an mindestens einem von dem Stromfluss 14 durchstromten Element integriert. Auch in diesem Fall sind ein Vergleich und/oder eine Auswertung der Sensordaten mit hinterlegten/einprogrammierten Grenzen und/oder Kennlinien zum Erkennen eines Übersteigens der Auslöselast, und damit einer wahrscheinlichen Überlastung der Stromleitung 12, ausführbar. In einer vorteilhaften Ausführungsform eines derartigen Leitungsschutzschalters 10 können für die Messungen PTC- und/oder NTC-Temperatursensoren verwendet werden.

Des Weiteren kann in dem Leitungsschutzschalter 10 ein thermischer Auslöser integriert sein. Ein derartiger thermischer Auslöser kann beispielsweise ein Bimetall aufweisen, welches sich bei einer Überlast aufgrund der durch die vergleichsweise hohe Stromstärke des Stromflusses 14 durch das Bimetall bewirkten Erwärmung biegt, und somit den das Bimetall umfassenden Abschaltmechanismus 16 auslöst. Ein Leitungsschutzschalter 10 mit einem thermischen Auslöser gewährleistet ein verlässliches Auslösen des Leitungsschutzschalters 10 bei einer Auslastung über der Auslöselast. Dabei kann eine bevorzugte Auslöselast über einen Nennwert, beispielsweise 16A, vorgegeben werden. Ein thermischer Auslöser ist insbesondere durch das Material und/oder die Größe des verwendeten Bimetalls kostengünstig mit der zusätzlichen Funktion ausbildbar, dass die Zeit von einem Überschreiten des Nennstroms bis zur Auslösung des Leitungsschutzschalters 10 von der Differenz zwischen dem Nennstrom und der Stromstärke des Überstroms abhängt.

Die Stromleitung 12 kann beispielsweise eine durch mehrere Räume 18 und 20 eines Wohnhauses führende Stromleitung 12 sein. Aufgrund der im Weiteren beschriebenen erfindungsgemäßen Technologie muss die Stromleitung 12 nicht für einen Stromfluss 14 mit einer vergleichsweise hohen Stromstärke ausgelegt sein. Somit kann auch eine kostengünstige und standardmäßig verwendete Stromleitung 12 mit dem Leitungsschutzschalter 10 und/oder mit der nachfolgend beschriebenen Aufladevorrichtung 22 zusammenwirken.

An die Stromleitung 12 ist ein wiederaufladbarer Energiespeicher 24 eines Verbrauchers 26 angekoppelt. Die Aufladevorrichtung 22 kann zusammen mit dem wiederaufladbaren Energiespeicher 24 an oder in dem Verbraucher 26 integriert sein. Der wiederaufladbare Energiespeicher 24 kann eine Batterie, insbesondere eine Fahrzeugbatterie eines als Elektrofahrzeug und/oder als Hybridfahrzeug ausgebildeten Verbrauchers 26, welcher in der Garage 18 geparkt ist, sein. Die Aufladevorrichtung 22 kann als Untereinheit des wiederaufladbaren Energiespeichers 24 oder als extern von dem Energiespeicher 24 anordbare kompakte Einheit ausgebildet sein.

Zusätzlich zu dem wiederaufladbaren Energiespeicher 24 kann noch mindestens ein weiterer Stromverbraucher 28 in der Garage 18 und/oder in dem mindestens einem weiteren Raum 20 angeordnet sein, welcher an die Stromleitung 12 derart angekoppelt ist, dass er bei einem aktiven Betrieb von dieser mit Energie versorgt wird. Der mindestens eine weitere Verbraucher 28 kann beispielsweise ein Standardverbraucher, wie z.B. eine Waschmaschine, ein Kühlschrank, eine Beleuchtung und/oder ein entsprechendes elektrisches Gerät, sein. Wie nachfolgend deutlich wird, ist eine Ausstattung eines derartigen Stromverbrauchers 28 mit einer Kommunikationseinrichtung aufgrund der vorteilhaften Ausbildung des Leitungsschutzschalters 10 nicht notwendig.

Als Ergänzung oder als Alternative zu dem mindestens einem weiteren Stromverbraucher 28 kann auch mindestens ein weiterer Energiespeicher 30 an die Stromleitung 12 angeschlossen sein. Auch der mindestens eine weitere Energiespeicher 30 kann mittels eines von der Stromleitung 12 bereitgestellten Fremdaufladestroms aufladbar sein. Es wird darauf hingewiesen, dass die im Weiteren beschriebene erfindungsgemäße Technologie auch ohne den mindestens einen weiteren Energiespeicher 30 oder ohne den Leitungsschutzschalter 10 ausführbar ist.

Nachfolgend wird das Zusammenwirken der Aufladevorrichtung 22, des Leitungsschutzschalters 10 und/oder des mindestens einen weiteren Energiespeichers 30 beispielhaft beschrieben:
Der Leitungsschutzschalter 10 weist eine Sensoreinrichtung 32 auf, mittels welcher eine Auslastungsinformation bezüglich einer Auslastung einer Auslöselast des Leitungsschutzschalters ermittelbar ist. Beispiele für eine derartige Auslastungsinformation sind oben bereits genannt. Ein der ermittelten Auslastungsinformation entsprechendes Sensorsignal 34 wird von der Sensoreinrichtung 32 an eine Signal-Ausgabeeinrichtung 36 des Leitungsschutzschalters 10 bereitgestellt. Die Signal-Ausgabeeinrichtung 36 ist dazu ausgebildet, ein der Auslastungsinformation entsprechendes Auslastungsinformations-Signal 37 an zumindest die Aufladevorrichtung 22 für den wiederaufladbaren Energiespeicher 24 bereitzustellen. Zusammenfassend kann der Leitungsschutzschalter 10 somit als Leitungsschutzschalter 10 mit Mess- und Kommunikationseinrichtung bezeichnet werden.

Insbesondere kann ein Leitungsschutzschalter 10 mit einem thermischen Auslöser eine Sensoreinrichtung 32 aufweisen, welche dazu ausgebildet ist, als zumindest Teil der Auslastungsinformation 34 eine Temperatur-Information bezüglich einer Temperatur einer stromdurchflossene Komponente des thermischen Auslösers, beispielsweise einer Bimetall-Komponente zu ermitteln. Diese Integration der Sensoreinrichtung 32 in den thermischen Auslöser reduziert die Kosten und die Größe eines derartigen Leitungsschutzschalters 10.

Bevorzugter Weise ist die Signal-Ausgabeeinrichtung 36 zusätzlich dazu ausgebildet, das Auslastungsinformations-Signal 37 über die Stromleitung 12 an die Aufladevorrichtung 22 auszugeben. Eine derartige Powerline-Kommunikation von dem Leitungsschutzschalter 10 an die Aufladevorrichtung 22 erlaubt eine kostengünstige Ausbildung der Signal-Ausgabeeinrichtung 36. Zusätzlich gewährleistet die Verwendung der Stromleitung 12 als Übertragungsmedium eine Übertragung der ermittelten Auslastungsinformation und/oder einer aus dieser hergeleiteten Information unabhängig von elektromagnetischen Störsignalen in einer räumlichen Umgebung des Leitungsschutzschalters 10 und der Aufladevorrichtung 22. Des Weiteren ist in diesem Fall sichergestellt, dass die Aufladevorrichtung 22 das Auslastungsinformations-Signal 37 nur von einem Leitungsschutzschalter 10 einer Stromleitung 12 empfängt, mit welcher die Aufladevorrichtung 22 zum Aufladen des wiederaufladbaren Energiespeichers 24 zusammenwirkt.

Wie über die gestrichelte Linie 38 in Fig. 2 dargestellt ist, ist die Kommunikation von dem Leitungsschutzschalter 10 an die Aufladevorrichtung 22 jedoch nicht auf die Verwendung der Stromleitung 12 zur Übertragung des Auslastungsinformations-Signals 37 beschränkt. Beispielsweise kann die Signal-Ausgabeeinrichtung 36 auch zum drahtlosen Bereitstellen des Auslastungsinformations-Signals 37, beispielsweise als elektromagnetisches Signal, ausgebildet sein.

Zusammen mit einer Auslastungsinformation bezüglich einer aktuellen Belastung des Leitungsschutzschalters 10 können auch technische Daten über den Typ des Leitungsschutzschalters 10 (z.B. 16 A-Typ) über das Auslastungsinformations-Signal 37 von der Signal-Ausgabeeinrichtung 36 an die Aufladevorrichtung 22 bereitgestellt werden. Die Auslastungsinformation kann beispielsweise eine Warnung, dass der Leitungsschutzschalter kurz vor dem Auslösen ist, eine prozentuale Auslastung der Auslöselast und/oder einen Stromstärkewert des Stromflusses 14 umfassen. Die hier genannten Beispiele schränken die Auslastungsinformation jedoch nicht ein.

Optional ist an dem mindestens einen weiteren Energiespeicher 30 eine Komponente 40 gekoppelt, welche beispielsweise als Aufladegerät ausgebildet sein kann. Insbesondere kann die mindestens eine Komponente 40 entsprechend der nachfolgend beschriebenen Aufladevorrichtung 22 ausgebildet sein. Bevorzugter Weise ist die mindestens eine Komponente 40 dazu ausgelegt, ein Fremd-Aufladeinformations-Signal 41 mit einer Fremd-Aufladeinformation bezüglich einer Leistung und/oder einer Restzeit eines von der Stromleitung 12 an den mindestens einen weiteren Energiespeicher 30 bereitgestellten Fremdaufladestroms zum Aufladen des mindestens einen weiteren Energiespeichers 30 auszugeben. Auch das Fremd-Aufladeinformations-Signal 41 kann drahtlos oder leitungsgebunden an die Aufladevorrichtung 22 ausgegeben werden.

Die Aufladevorrichtung 22 weist eine Empfangseinrichtung 42 auf. Die Empfangseinrichtung 42 ist dazu ausgebildet, dass Auslastungsinformations-Signal 37 und/oder das Fremd-Aufladeinformations-Signal 41 zu empfangen.

Die Aufladevorrichtung 22 umfasst zusätzlich eine Auswerteeinrichtung 44, welche dazu ausgebildet ist, zumindest eine Vorgabegröße bezüglich eines zeitlichen Soll-Stromstärke-Verlaufs eines von der Stromleitung an den wiederaufladbaren Energiespeicher bereitzustellenden Soll-Aufladestroms festzulegen. Das Festlegen erfolgt dabei unter Berücksichtigung des empfangenen Auslastungsinformations-Signals und/oder des empfangenen Fremd-Aufladeformations-Signals. Dazu gibt die Empfangseinrichtung 42 ein entsprechendes Empfangssignal 46 an die Auswerteeinrichtung 44 aus. Beispiele für die zumindest eine Vorgabegröße, welche mittels der Auswerteeinrichtung 44 festlegbar ist, sind oben aufgezählt.

Die Auswerteeinrichtung stellt ein Vorgabegrößensignal 48 mit der zumindest einen festgelegten Vorgabegröße an eine Steuereinrichtung 50 der Aufladevorrichtung 22 bereit. Die Steuereinrichtung 50 ist dazu ausgebildet, nach einem Empfangen des Vorgabegrößensignals 48 unter Berücksichtigung der zumindest einen festgelegten Vorgabegröße mindestens ein Steuersignal 52 an eine Aufladeschaltung 54 auszugeben. Bevorzugter Weise ist die Aufladeschaltung 54 mittels des mindestens einen Steuersignals 52 derart ansteuerbar ist, dass über die Aufladeschaltung 54 ein der zumindest einen festgelegten Vorgabegröße entsprechender Aufladestrom von der Stromleitung 12 an den wiederaufladbaren Energiespeicher 24 anlegbar ist. Die Aufladeschaltung 54 kann eine Untereinheit der Aufladevorrichtung 22 sein.

Durch ein derartiges Ansteuern der Aufladeschaltung 54 beim Aufladen des wiederaufladbaren Energiespeichers 24 ist gewährleistet, dass weder die Stromleitung 12 noch der Leitungsschutzschalter 10 überlastet werden oder aufgrund eines Auslösens des Leitungsschutzschalters 10 der wiederaufladbare Energiespeicher vom Netz getrennt wird. Das Aufladen des wiederaufladbaren Energiespeichers 24 ist somit an die betriebenen Stromverbraucher 28 und/oder den mindestens einen aufzuladenden Energiespeicher 30 anpassbar. Dies gewährleistet eine problemlose und gefahrlose Nutzung einer schon vorhandenen Verkabelung, wie beispielsweise der Stromleitung 12 für ein Aufladen eines wiederaufladbaren Energiespeichers 24 bei gleichzeitig sicherem Betrieb der ebenfalls angeschlossenen Stromverbraucher 28 und/oder parallelem Aufladen des mindestens einen weiteren Energiespeichers 30 trotz eines vergleichsweise großen Energiebedarfs des wiederaufladbaren Energiespeichers 24. Dabei ist insbesondere ausnutzbar, dass ein wiederaufladbarer Energiespeicher 24 häufig bereits eine Aufladeschaltung 54 umfasst, mittels welcher eine Aufnahmeleistung regelbar ist. Die Stromleitung 12 stellt dabei einen abgesicherten Pfad dar, über welchen ein Aufladen des wiederaufladbaren Energiespeichers 24 auch unter Verwendung eines Hausanschlusses ausführbar ist. Insbesondere ist die hier beschriebene erfindungsgemäße Technologie zum Aufladen eines wiederaufladbaren Energiespeichers eines Elektro- oder Hybridfahrzeugs an einer nicht speziell dazu ausgelegten Ladestation, sondern beispielsweise in der heimischen Garage 18, vorteilhaft.

Die Verwendung des hier beschriebenen Leitungsschutzschalters 10 ist mit dem zusätzlichen Vorteil verbunden, dass bei heute üblichen Hausinstallationen (Verkabelungen und/oder Absicherungen) bereits mehrere Steckdosen und Beleuchtungen in mehreren Räumen über einen gemeinsamen Leitungsschutzschalter 10 abgesichert sind. Ein derartiger Leitungsschutzschalter 10 ist leicht austauschbar, insbesondere sofern er an einem Abzweig, welcher in die Garage 18 führt, anordbar ist. Somit ist eine Installation einer Vorrichtung zum Gewährleisten der hier beschriebenen Vorteile einfach ausführbar und mit geringen Kosten verbunden. Der Leitungsschutzschalter 10 kann gleiche Abmessungen und Grundfunktionen wie standardgemäße Schalter aufweisen, so beispielsweise eine Abwärtskompatibilität und/oder eine "plug-and-play-Funktion".

In einer Situation, in welcher die Stromverbraucher 28 und der eventuell mindestens eine weitere Energiespeicher 30 einen geringen Strombedarf aufweisen, ist es möglich, sehr schnell viel Energie an den wiederaufladbaren Energiespeicher 24 bereitzustellen, ohne dass dazu ein speziell für den wiederaufladbaren Energiespeicher 24 exklusiv zur Verfügung stehendes Netz verwendet werden muss. Demgegenüber kann in einer Situation mit einem signifikanten Strombedarf des mindestens einem Stromverbrauchers 28 und/oder des mindestens einen weiteren Energiespeichers 30 die Energieentnahme von der Stromleitung 12 zum Aufladen des wiederaufladbaren Energiespeichers 24 so reduziert und/oder verzögert werden, dass kein Auslösen des Leitungsschutzschalters 10 und/oder eine Überlastung der Stromleitung 12 riskiert wird. Somit wird ein Trennen der an der Stromleitung 12 angeschlossenen Komponenten 28 und 30 aufgrund eines plötzlichen Auslösens des Leitungsschutzschalters 10 verhindert. Gleichzeitig können auch während des Ladevorgangs noch elektrische Verbraucher 28 und 30 am selben Netz/der gleichen Stromleitung 12 in Betrieb genommen werden.

Auf diese Weise ist ein sicheres Ausnutzen der Abgabeleistung eines Stromkreises/der Stromleitung 12 bei gleichzeitig möglichst schnell ausführbaren Aufladen des wiederaufladbaren Energiespeichers 24 an eben diesem Stromkreis/dieser Stromleitung 12 gewährleistet. Die Ladeleistung (Aufnahmeleistung) kann bis zum maximal zulässigen Strom sicher ausgenutzt werden. Auf diese Weise ist eine Sicherstellung eines voll geladenen Energiespeichers 24 realisierbar, ohne dass das Laden durch Auslösen des Leitungsschutzschalters unterbrochen wird. Auch ein Kabelbrand und/oder eine dauerhafte Überlastung der Stromleitung 12 sind verhinderbar.

Bereits vorhandene Installationen und Verkabelungen sind auch bei gestiegenen Anforderungen, wie sie beispielsweise beim Laden eines Elektrofahrzeugs auftreten, nutzbar. Möglich ist diese Integration aber auch bei allen Verbrauchern mit hoher Leistung, die die Aufnahmeleistung regeln können. In einer bevorzugten Weiterbildung umfasst die Aufladevorrichtung 22 zusätzlich eine (nicht skizzierte) Informations-Ausgabevorrichtung, mittels welcher während eines Ansteuerns der Aufladeschaltung 54 ein Eigen-Aufladeinformations-Signal bezüglich des zeitlichen Soll-Stromstärke-Verlaufs an die an den mindestens einen weiteren Energiespeicher 30 angekoppelte Komponente 40 ausgebbar ist. Die Aufladevorrichtung 22 und die Komponente 40 können somit als intelligente Verbraucher/Aufladegeräte Informationen voneinander empfangen und interpretieren. Anschließend kann jeder der beiden intelligenten Verbraucher seine eigene Stromentnahme von der Stromleitung 12 entsprechend anpassen. Möglich ist dabei beispielsweise ein Drosseln bei drohender Überlast oder ein Steigern zu einer ausführbaren Maximalleistung.

## Patentansprüche

1. Verfahren zum Aufladen eines wiederaufladbaren Energiespeichers (24) mit den Schritten:
Ankoppeln des wiederaufladbaren Energiespeichers (24) an eine Stromleitung (12) (SO);
Ermitteln einer Auslastungsinformation (34) bezüglich einer Auslastung einer Auslöselast eines an die Stromleitung (12) gekoppelten Leitungsschutzschalters (10) (S1); und/oder
Ermitteln einer Fremd-Aufladeinformation (41) bezüglich einer Leistung und/oder einer Restzeit eines von der Stromleitung (12) an einen weiteren Energiespeicher (30) bereitgestellten Fremdaufladestroms (S2);
Festlegen zumindest einer Vorgabegröße (48) bezüglich eines zeitlichen Soll-Stromstärke-Verlaufs eines von der Stromleitung (12) an den wiederaufladbaren Energiespeicher (24) bereitzustellenden Soll-Aufladestroms unter Berücksichtigung der ermittelten Auslastungsinformation (34) und/oder der ermittelten Fremd-Aufladeinformation (41) (S3);
Anlegen eines Aufladestroms von der Stromleitung (12) an den wiederaufladbaren Energiespeicher (24) unter Berücksichtigung der zumindest
einen festgelegten Vorgabegröße (48) (S4);
**dadurch gekennzeichnet, dass**
ein ermitteltes der Auslastungsinformation (34) entsprechendes Auslastungsinformations-Signal (37), welches zur Steuerung des Aufladens des wiederaufladbaren Energiespeichers (24) verwendet wird, drahtlos an eine der Steuerung dienende Aufladevorrichtung (22) übertragen wird.

2. Verfahren nach Anspruch 1, wobei als die zumindest eine Vorgabegröße (48) bezüglich des zeitlichen Soll-Stromstärke-Verlaufs zumindest eine Vorgabegröße bezüglich einer konstanten Soll-Stromstärke des bereitzustellenden Soll-Aufladestroms, einer Höchst-Stromstärke des bereitzustellenden Soll-Aufladestroms, eines Zeitverlaufs einer variierenden Soll-Stromstärke des bereitzustellenden Soll-Aufladestroms, einer Wartezeit vor einem Aktivieren des bereitzustellenden Soll-Aufladestroms und/oder einer Abbruchzeit des bereitzustellenden Soll-Aufladestroms festgelegt wird.

3. Verfahren nach Anspruch 1 oder 2, wobei während des Anlegens des Aufladestroms eine Eigen-Aufladeinformation bezüglich des zeitlichen Soll-Stromstärke-Verlaufs an eine an den weiteren Energiespeicher (30) angekoppelte Komponente (40) ausgegeben wird (S5).

4. Aufladevorrichtung (22) für einen wiederaufladbaren Energiespeicher (24) mit:
einer Empfangseinrichtung (42), welche dazu ausgebildet ist, das von einem Leitungsschutzschalter (10) einer Stromleitung (12), an welche der wiederaufladbare Energiespeicher (24) ankoppelbar ist, ausgegebenes Auslastungsinformations-Signal (37) bezüglich einer Auslastung einer Auslöselast des Leitungsschutzschalters (10) und/oder ein von einer an einem weiteren Energiespeicher (30) angekoppelten Komponente (40) ausgegebenes Fremd-Aufladeinformations-Signal (41) bezüglich einer Leistung und/oder einer Restzeit eines von der Stromleitung (12) an den weiteren Energiespeicher (30) bereitgestellten Fremdaufladestroms drahtlos zu empfangen;
einer Auswerteeinrichtung (44), welche dazu ausgebildet ist, zumindest eine Vorgabegröße (48) bezüglich eines zeitlichen Soll-Stromstärke-Verlaufs eines von der Stromleitung (12) an den wiederaufladbaren Energiespeicher (24) bereitstellbaren Soll-Aufladestroms unter Berücksichtigung des empfangenen Auslastungsinformations-Signals (37) und/oder des empfangenen Fremd-Aufladeinformations-Signals (41) festzulegen; und
einer Steuereinrichtung (50), welche dazu ausgebildet ist, unter Berücksichtigung der zumindest einen festgelegten Vorgabegröße (48) mindestens ein Steuersignal (52) an eine Aufladeschaltung (54) bereitzustellen, so dass über die Aufladeschaltung (54) ein der zumindest einen festgelegten Vorgabegröße (48) entsprechender Aufladestrom von der Stromleitung (12) an den wiederaufladbaren Energiespeicher (24) anlegbar ist.

5. Aufladevorrichtung (22) nach Anspruch 4, wobei die Aufladevorrichtung (22) eine Informations-Ausgabevorrichtung umfasst, mittels welcher während eines Ansteuerns der Aufladeschaltung ein Eigen-Aufladeinformations-Signal bezüglich des zeitlichen Soll-Stromstärke-Verlaufs an die an den weiteren Energiespeicher (30) angekoppelte Komponente (40) ausgebbar ist.

6. Wiederaufladbarer Energiespeicher (24) umfassend eine Aufladevorrichtung (22) nach einem der Ansprüche 4 oder 5.

7. Fahrzeug (26) mit einer Aufladevorrichtung (22) nach einem der Ansprüche 4 oder 5 und/oder einem wiederaufladbaren Energiespeicher (24) nach Anspruch 6.

8. Leitungsschutzschalter (10) mit:
einer Sensoreinrichtung (32), welche dazu ausgebildet ist, eine Auslastungsinformation (34) bezüglich einer Auslastung einer Auslöselast des Leitungsschutzschalters (10) zu ermitteln; und
einer Signal-Ausgabeeinrichtung (36), welche dazu ausgebildet ist, ein der Auslastungsinformation (34) entsprechendes Auslastungsinformations-Signal (37) drahtlos an eine Aufladevorrichtung (22) für einen wiederaufladbaren Energiespeicher (24) bereitzustellen.

9. Leitungsschutzschalter (10) nach Anspruch 8, wobei die Signal-Ausgabeeinrichtung (36) zusätzlich dazu ausgebildet ist, das Auslastungsinformations-Signal (37) über eine Stromleitung (12), über welche der Leitungsschutzschalter (10) mit der Aufladevorrichtung (22) verbindbar ist, an die Aufladevorrichtung (22) bereitzustellen.

10. Leitungsschutzschalter (10) nach Anspruch 8 oder 9, wobei der Leitungsschutzschalter (10) einen thermischen Auslöser umfasst, mittels welchem der Leitungsschutzschalter (10) bei einer Auslastung über der Auslöselast auslösbar ist, und wobei die Sensoreinrichtung (32) zusätzlich dazu ausgebildet ist, als zumindest Teil der Auslastungsinformation (34) eine Temperatur-Information bezüglich einer Temperatur einer stromdurchflossene Komponente des thermischen Auslösers zu ermitteln.

## Claims

1. Method for charging a rechargeable energy store (24) with the steps of:
coupling the rechargeable energy store (24) to a current conductor (12) (SO);
identifying an item of capacity utilization information (34) in respect of the capacity utilization of a trigger load of a circuit breaker (10) (S1) coupled to the current conductor (12); and/or
identifying a separate item of charging information (41) in respect of a power and or a residual time of a separate charging current (S2) provided from the current conductor (12) at a further energy store (30);
determining at least one preset variable (48) in respect of a temporal nominal current strength profile of a nominal charging current to be provided from the current conductor (12) at the rechargeable energy store (24), taking into account the identified item of charging information (34) and/or the identified separate item of charging information (41) (S3);
applying a charging current from the current conductor (12) to the rechargeable energy store (24), taking into account the at least one determined preset variable (48) (S4);
**characterized in that**
an identified capacity utilization information signal (37), which corresponds to the item of capacity utilization information (34) and is used to control the charging of the rechargeable energy store (24), is wirelessly transmitted to a charging device (22) used for the control.

2. Method according to Claim 1, wherein, as the at least one preset variable (48) in respect of the temporal nominal current strength profile, at least one preset variable in respect of a constant nominal current strength of the nominal charging current to be provided, a maximum current strength of the nominal charging current to be provided, a temporal profile of a varying nominal current strength of the nominal charging current to be provided, a delay time before activation of the nominal charging current to be provided and/or a disconnection time of the nominal charging current to be provided is determined.

3. Method according to Claim 1 or 2, wherein, while the charging current is being applied, an individual item of charging information in respect of the temporal nominal current strength profile is output (S5) to a component (40) coupled to the further energy store (30).

4. Charging device (22) for a rechargeable energy store (24), having:
a receiving device (42), which is designed to wirelessly receive the capacity utilization information signal (37), which is output by a circuit breaker (10) of a current conductor (12) to which the rechargeable energy store (24) can be coupled, in respect of capacity utilization of a trigger load of the circuit breaker (10) and/or a separate charging information signal (41), which is output by a component (40) coupled to a further energy store (30), in respect of a power and/or residual time of a separate charging current provided from the current conductor (12) to the further energy store (30);
an evaluation device (44), which is designed to determine at least one preset variable (48) in respect of a temporal nominal current strength profile of a nominal charging current which can be provided from the current conductor (12) to the rechargeable energy store (24), taking into account the received capacity utilization information signal (37) and/or the received separate charging information signal (41); and
a control device (50), which is designed to provide at least one control signal (52) to a charging circuit (54), taking into account the at least one determined preset variable (48), with the result that a charging current corresponding to the at least one determined preset variable (48) can be applied from the current conductor (12) to the rechargeable energy store (24) via the charging circuit (54).

5. Charging device (22) according to Claim 4, wherein the charging device (22) comprises an information outputting device, by means of which an individual charging information signal in respect of the temporal nominal current strength profile at the component (40) coupled to the further energy store (30) can be output during actuation of the charging circuit.

6. Rechargeable energy store (24) comprising a charging device (22) according to either of Claims 4 and 5.

7. Vehicle (26) having a charging device (22) according to either of Claims 4 and 5, and/or a rechargeable energy store (24) according to Claim 6.

8. Circuit breaker (10) having:
a sensor device (32) which is designed to identify an item of capacity utilization information (34) in respect of the capacity utilization of a trigger load of the circuit breaker (10); and
a signal outputting device (36) which is designed to provide a capacity utilization information signal (37) corresponding to the item of capacity utilization information (34) wirelessly at a charging device (22) for a rechargeable energy store (24).

9. Circuit breaker (10) according to Claim 8, wherein the signal outputting device (36) is additionally designed to provide the capacity utilization information signal (37) at the charging device (22) via a current conductor (12), via which the circuit breaker (10) can be connected to the charging device (22).

10. Circuit breaker (10) according to Claim 8 or 9, wherein the circuit breaker (10) comprises a thermal trigger, by means of which the circuit breaker (10) can be triggered via the trigger load in the event of capacity utilization, and wherein the sensor device (32) is additionally designed to identify, as at least part of the item of capacity utilization information (34), an item of temperature information in respect of a temperature of a component of the thermal trigger through which a current flows.

## Revendications

1. Procédé de chargement d'un accumulateur d'énergie (24) rechargeable, le procédé comportant les étapes qui consistent à :
raccorder l'accumulateur d'énergie (24) rechargeable à un conducteur de courant (12) (SO),
déterminer une information de pleine charge (34) indiquant l'atteinte de la charge de déclenchement d'un commutateur (10) de protection de conducteur raccordé au conducteur de courant (12) (S1) et/ou
déterminer une information étrangère de recharge (41) concernant la puissance et/ou la durée restante d'un courant de charge étranger délivré par le conducteur de courant (12) à un autre accumulateur d'énergie (30) (S2),
définir au moins une grandeur de consigne (48) qui concerne l'évolution temporelle de consigne de l'intensité du courant de charge de consigne que doit délivrer le conducteur de courant (12) à l'accumulateur d'énergie (24) rechargeable en tenant compte de l'information de pleine charge (34) qui a été déterminée et/ou de l'information (41) de recharge étrangère qui a été déterminée (S3),
faire appliquer par le conducteur de courant (12) un courant de charge sur l'accumulateur d'énergie (24) rechargeable en tenant compte de la ou des grandeurs de consigne (48) qui ont été définies (S4)
**caractérisé en ce que**
un signal (37) d'information de pleine charge qui a été déterminé, qui correspond à l'information de pleine charge (34) et qui est utilisé pour la commande de la charge de l'accumulateur d'énergie (24) rechargeable est transmis sans fil à un dispositif de charge (22) qui sert à la commande.

2. Procédé selon la revendication 1, dans lequel au moins une grandeur de consigne concernant une intensité de courant de consigne constante du courant de charge à délivrer, une intensité maximale du courant de charge à délivrer, l'évolution temporelle d'une intensité de consigne variable du courant de charge de consigne à délivrer, le temps d'attente avant l'activation du courant de charge de consigne à délivrer et/ou l'instant d'interruption du courant de charge de consigne à délivrer sont définis comme grandeur ou grandeurs de consigne (48) concernant l'évolution temporelle de consigne de l'intensité du courant.

3. Procédé selon les revendications 1 ou 2, dans lequel pendant l'application du courant de charge, une information propre de charge concernant l'évolution temporelle de l'intensité de consigne de courant est délivrée (S5) à un composant (40) raccordé à l'autre accumulateur d'énergie (30).

4. Dispositif de charge (22) pour accumulateur d'énergie (24) rechargeable, le dispositif présentant :
un dispositif de réception (42) configuré pour recevoir sans fil le signal (37) d'information de pleine charge délivré par un commutateur (10) de protection du conducteur de courant (12) auquel l'accumulateur d'énergie (24) rechargeable peut être raccordé, et qui indique l'atteinte de la charge de déclenchement du commutateur (10) de protection du conducteur et/ou un signal étranger (41) d'information de charge délivré par un composant (40) raccordé à un autre accumulateur d'énergie (30) à propos de la puissance et/ou de la durée résiduelle d'un courant étranger de charge délivré par le conducteur de courant (12) à l'autre accumulateur d'énergie (30),
un dispositif d'évaluation (44) configuré pour définir au moins une grandeur de consigne (48) qui concerne l'évolution temporelle de consigne d'intensité du courant de charge de consigne qui peut être délivré par le conducteur de courant (12) à l'accumulateur d'énergie (24) rechargeable en tenant compte du signal (37) d'information de pleine charge reçu et/ou du signal étranger (41) d'information de charge qui a été reçu et
un dispositif de commande (50) configuré pour délivrer à un circuit de charge (54) au moins un signal de commande (52) qui tient compte de la ou des grandeurs de consigne (48) qui ont été définies, de telle sorte qu'un courant de charge qui correspond à la ou aux grandeurs de consigne (48) qui ont été définies puisse être appliqué par le conducteur de courant (12) sur l'accumulateur d'énergie (24) rechargeable par l'intermédiaire du circuit de charge (54).

5. Dispositif de charge (22) selon la revendication 4, dans lequel le dispositif de charge (22) comporte un dispositif de fourniture d'information au moyen duquel, pendant la commande du circuit de charge, un signal propre d'information de charge concernant l'évolution temporelle de consigne de l'intensité du courant puisse être délivré au composant (40) raccordé à l'autre accumulateur d'énergie (30).

6. Accumulateur d'énergie (24) rechargeable comprenant un dispositif de charge (22) selon l'une des revendications 4 ou 5.

7. Véhicule (26) doté d'un dispositif de charge (22) selon l'une des revendications 4 ou 5 et/ou d'un accumulateur d'énergie (24) rechargeable selon la revendication 6.

8. Commutateur (10) de protection de conducteur présentant :
un dispositif de capteur (32) configuré pour déterminer une information de pleine charge (34) qui indique l'atteinte de la charge de déclenchement du commutateur (10) de production du conducteur et
un dispositif (36) d'émission de signal qui est configuré pour délivrer sans fil un signal (37) d'information de pleine charge qui correspond à l'information de pleine charge (34) à un dispositif de charge (22) d'un accumulateur d'énergie (24) rechargeable.

9. Commutateur (10) de protection de conducteur selon la revendication 8, dans lequel le dispositif (36) de fourniture de signal est de plus configuré pour délivrer au dispositif de charge (22) le signal (37) d'information de pleine charge concernant un conducteur de courant (12) par lequel le commutateur (10) de protection de conducteur peut être raccordé au dispositif de charge (22).

10. Commutateur (10) de protection de conducteur selon les revendications 8 ou 9, dans lequel le commutateur (10) de protection de conducteur comporte un déclencheur thermique au moyen duquel le commutateur (10) de protection de conducteur peut être débranché au cas où il est chargé au-delà de la charge de déclenchement, le dispositif de capteur (32) étant de plus configuré pour déterminer en tant qu'au moins une partie de l'information de charge (34) une information de température qui concerne la température d'un composant du déclencheur thermique traversé par le courant.
